# EUROPEAN PATENT APPLICATION

(11) **EP 4 672 467 A1**
(43) Date of publication of application: **31.12.2025**
(21) Application number: 25757749.4
(22) Date of filing: 20.02.2025
(51) Int. Cl.: H01M 50/342

(54) **EXPLOSION-PROOF BATTERY VALVE AND BATTERY**

(30) Priority: 18.11.2024 CN 202411648537
(71) Applicant: Eve Energy Co., Ltd., Huizhou, Guangdong 516006 (CN)
(72) Inventor: QIN, Bo, Huizhou, Guangdong 516006 (CN); HUANG, Chuangju, Huizhou, Guangdong 516006 (CN); NIU, Jiaxin, Huizhou, Guangdong 516006 (CN); LING, Xinchen, Huizhou, Guangdong 516006 (CN)
(74) Representative: Grünecker Patent- und Rechtsanwälte PartG mbB
(86) International application number: PCT/CN2025/078172
(87) International publication number: WO 2025/176157

(57) **Abstract**

Provided are an explosion-proof battery valve and a battery. The explosion-proof battery valve includes a protective housing (1), a piercing pin (2), and a diaphragm (3). The protective housing (1) includes a housing body (11) and a protective cover (12) that are integrally formed by injection molding. The housing body (11) is a cylinder with openings at two ends of the housing body (11). The outer peripheral wall of the housing body (11) is provided with a radial vent hole (111). The protective cover (12) is sealingly connected to the opening at one end of the housing body (11). The opening at the other end of the housing body (11) is a pressure relief hole (113). The pressure relief hole (113) is in communication with the radial vent hole (111) and the interior of the battery. The piercing pin (2) is disposed on the top wall of the protective cover (12) and located in the inner cavity (112) of the housing body (11). The diaphragm (3) is configured to cover the pressure relief hole (113) and to be driven to deform toward the piercing pin (2) by gas discharged from the interior of the battery so as to be pierced by the piercing pin (2).

## Description

This application claims priority to Chinese Patent Application No. 202411648537.9 filed with the China National Intellectual Property Administration (CNIPA) on Nov. 18, 2024, the disclosure of which is incorporated herein by reference in its entirety.

### TECHNICAL FIELD

The present application relates to the field of battery technology, specifically an explosion-proof battery valve and a battery.

### BACKGROUND

A battery is required to balance the external atmospheric pressure in daily use and is required to rapidly discharge gas generated inside the battery under an extreme thermal runaway condition. To achieve these functions, it is usual to mount an explosion-proof battery valve on the battery housing of the battery.

### TECHNICAL PROBLEM

Most existing explosion-proof battery valves are of the piercing-pin type. In an existing explosion-proof battery valve, the diaphragm is exposed to the external environment. In actual use, the battery may be installed in a complex environment, such as being exposed to gravel or impacted by water flow, so the diaphragm is prone to failure due to environmental influences. In the related art, to enhance protection of the diaphragm, it is typical to add a protective cover to the housing. However, the housing and the protective cover are usually manufactured separately and then assembled together, resulting in a complex manufacturing process and requiring additional assembly steps, thereby increasing the manufacturing costs.

### SUMMARY

In a first aspect, embodiments of the present application provide an explosion-proof battery valve. The explosion-proof battery valve includes a protective housing, a piercing pin, and a diaphragm.

The protective housing is configured to be mounted to the battery housing of the battery. The protective housing includes a housing body and a protective cover that are integrally formed by injection molding. The housing body is a cylinder with openings at two ends of the housing body. The outer peripheral wall of the housing body is provided with a radial vent hole. The protective cover is sealingly connected to the opening at one end of the housing body. The opening at the other end of the housing body is a pressure relief hole. The pressure relief hole is in communication with the radial vent hole and the interior of the battery.

The piercing pin is disposed on the top wall of the protective cover and located in the inner cavity of the housing body.

The diaphragm is configured to cover the pressure relief hole and to be driven to deform toward the piercing pin by gas discharged from the interior of the battery so as to be pierced by the piercing pin.

In a second aspect, embodiments of the present application provide a battery. The battery includes a battery housing and the preceding explosion-proof battery valve. The protective housing is mounted to the battery housing.

### BENEFICIAL EFFECTS

The present application provides an explosion-proof battery valve. The explosion-proof battery valve includes a protective housing, a piercing pin, and a diaphragm. The protective housing includes a housing body and a protective cover that are integrally formed by injection molding. The housing body is a cylinder with openings at two ends of the housing body. The outer peripheral wall of the housing body is provided with a radial vent hole. The protective cover is sealingly connected to the opening at one end of the housing body. The opening at the other end of the housing body is a pressure relief hole. The pressure relief hole is in communication with the radial vent hole and the interior of the battery. The piercing pin is disposed on the top wall of the protective cover and located in the inner cavity of the housing body. The diaphragm is configured to cover the pressure relief hole and to be driven to deform toward the piercing pin by gas discharged from the interior of the battery so as to be pierced by the piercing pin. In this manner, the gas inside the battery can be rapidly discharged through the pressure relief hole and the radial vent hole in sequence, thereby achieving pressure relief. In the explosion-proof battery valve according to the present application, the housing body and the protective cover are integrally injection-molded, eliminating additional assembly between the housing body and the protective cover, thereby simplifying the manufacturing process of the explosion-proof battery valve, facilitating manufacturing, and reducing the costs. Moreover, since the diaphragm covers the pressure relief hole in the inner cavity of the housing body, and the radial vent hole is formed only on the outer peripheral wall of the housing body, the protective housing provides protection for the diaphragm, effectively preventing diaphragm failure and satisfying the IP6K9K protection rating.

The present application also provides a battery with the preceding explosion-proof battery valve, thereby simplifying the manufacturing process of the explosion-proof battery valve, facilitating manufacturing, reducing the costs, effectively preventing diaphragm failure, enhancing protection of the diaphragm, and satisfying the IP6K9K protection rating.

### BRIEF DESCRIPTION OF THE DRAWINGS

FIG. 1 is a first view illustrating the structure of an explosion-proof battery valve according to embodiments of the present application.
FIG. 2 is a second view illustrating the structure of an explosion-proof battery valve according to embodiments of the present application.
FIG. 3 is a section view of an explosion-proof battery valve according to embodiments of the present application.

Reference list
20. battery housing; 201. mounting hole;
1. protective housing; 11. housing body; 111. radial vent hole; 112. inner cavity; 113. pressure relief hole; 114. annular protrusion; 12. protective cover; 13. reinforcing rib; 14. mounting portion; 141. arc-shaped snap-fit plate; 1411. abutting snap-fit tongue;
2. piercing pin; 21. connecting column portion; 211. inner groove; 22. pin head portion;
3. diaphragm;
4. sealing ring

### DETAILED DESCRIPTION

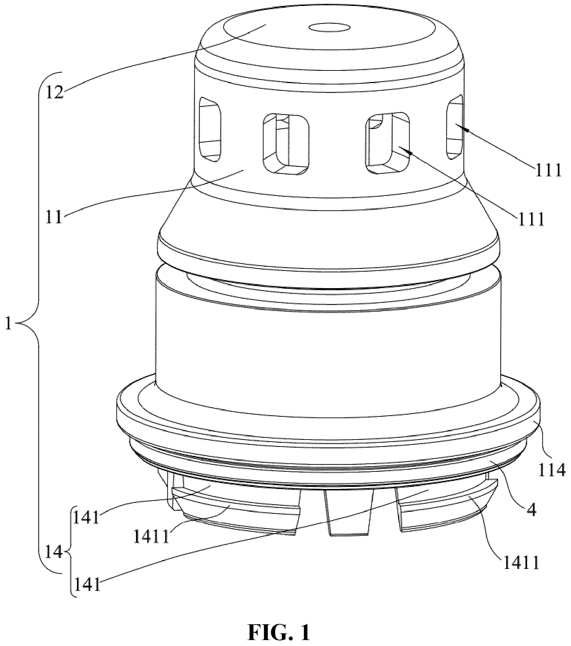

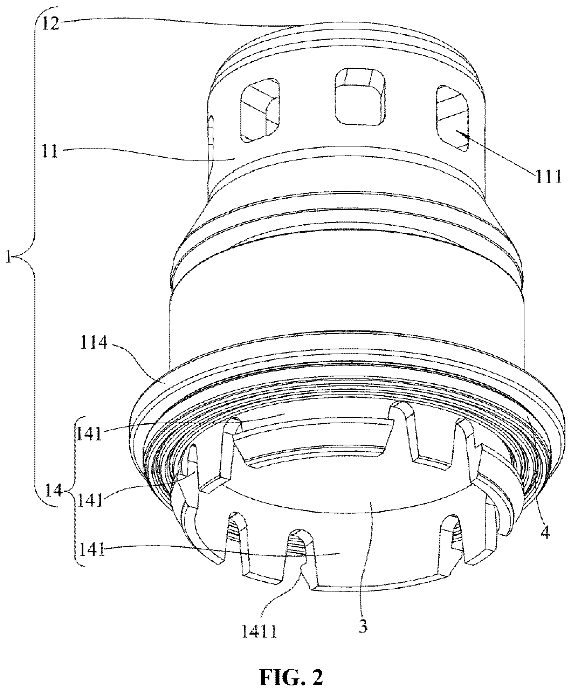

As shown in FIG. 1 to FIG. 3, an embodiment provides an explosion-proof battery valve. The explosion-proof battery valve includes a protective housing 1, a piercing pin 2, and a diaphragm 3. The protective housing 1 is configured to be mounted to the battery housing 20 of the battery. The protective housing 1 includes a housing body 11 and a protective cover 12 that are integrally formed by injection molding. The housing body 11 is a cylinder with openings at two ends of the housing body 11. The outer peripheral wall of the housing body 11 is provided with radial vent holes 111. The protective cover 12 is sealingly connected to the opening at one end of the housing body 11. The opening at the other end of the housing body 11 is a pressure relief hole 113. The pressure relief hole 113 is in communication with the radial vent hole 111 and the interior of the battery. The piercing pin 2 is disposed on the top wall of the protective cover 12 and located in the inner cavity 112 of the housing body 11. The diaphragm 3 is configured to cover the pressure relief hole 113 and to be driven to deform toward the piercing pin 2 by gas discharged from the interior of the battery so as to be pierced by the piercing pin 2. In the explosion-proof battery valve according to this embodiment, the diaphragm 3 is configured to, when thermal runaway occurs inside the battery, enable gas discharged from the interior of the battery to drive the diaphragm 3 to deform toward the piercing pin 2 to make the diaphragm 3 pierced by the piercing pin 2 so that the gas inside the battery can be rapidly discharged through the pressure relief hole 113 and the radial vent hole 111 in sequence, thereby achieving pressure relief. In the explosion-proof battery valve according to this embodiment, the housing body 11 and the protective cover 12 are integrally injection-molded, eliminating additional assembly between the housing body 11 and the protective cover 12, thereby simplifying the manufacturing process of the explosion-proof battery valve, facilitating manufacturing, and reducing the costs. Moreover, since the diaphragm 3 covers the pressure relief hole 113 in the inner cavity 112 of the housing body 11, and the radial vent hole 111 is formed only on the outer peripheral wall of the housing body 11, the protective housing 1 provides protection for the diaphragm 3, effectively preventing diaphragm failure and satisfying the IP6K9K protection rating.

In this embodiment, the diaphragm 3 is opposite to the piercing pin 2, and the diaphragm 3 is located on the side of the piercing pin 2 facing the battery housing 20, thereby enabling gas discharged from the interior of the battery to drive the diaphragm 3 to deform toward the piercing pin 2 to make the diaphragm 3 pierced by the piercing pin 2.

In this embodiment, the diaphragm 3 is a breathable diaphragm. Under normal conditions, the internal environment of the battery is in communication with the external environment and performs gas exchange with the external environment through the diaphragm 3 and the radial vent hole 111 in sequence. When thermal runaway occurs inside the battery, due to a large amount of gas generated inside the battery, the gas inside the battery cannot rapidly pass through the diaphragm 3, enabling gas discharged from the interior of the battery to drive the diaphragm 3 to deform toward the piercing pin 2 to make the diaphragm 3 pierced by the piercing pin 2 so that the gas inside the battery can be rapidly discharged through the pressure relief hole 113 and the radial vent hole 111 in sequence, thereby achieving pressure relief.

In this embodiment, the diaphragm 3 is made of expanded polytetrafluoroethylene (expanded PTFE or E-PTFE). The material of the diaphragm 3 enables the diaphragm 3 to have a waterproof and breathable function, allowing the diaphragm 3 to satisfy the requirement of balancing air pressure during daily use of the battery. It is to be noted that the material of the diaphragm 3 is defined such that the micropore diameter of the diaphragm 3 is between 0.1 µm and 10 µm, whereas the average diameter of air molecules is only 0.00036 µm, the average diameter of water vapor molecules is 0.00047 µm, and the average diameter of drizzle droplets is about 500 µm. In other words, the pore diameter of the diaphragm 3 is more than 1000 times greater than the average diameter of gas molecules and is one several-thousandth of the average diameter of water droplets. In addition, because the surface energy of the diaphragm 3 is very low, under the action of surface tension (mutual attraction between water molecules), water droplets rapidly coalesce into larger water beads on the surface of the diaphragm 3. Therefore, gas can smoothly pass through the diaphragm 3 while liquid water cannot pass through the diaphragm 3, enabling the diaphragm 3 to have excellent waterproof and breathable performance.

In this embodiment, the diaphragm 3 is welded to the cavity wall of the protective housing 1, thereby ensuring the stability and tightness of the connection between the diaphragm 3 and the protective housing 1. In this embodiment, the diaphragm 3 and the cavity wall of the protective housing 1 may be connected by ultrasonic welding. Ultrasonic welding has the advantages of high control accuracy, high connection strength, stability and reliability, energy saving and environmental protection, and high efficiency and low costs. In other embodiments, the diaphragm 3 and the cavity wall of the protective housing 1 may also be welded by heat welding or other welding methods.

In this embodiment, as shown in FIG. 1 to FIG. 3, the piercing pin 2 is integrally injection-molded on the top wall of the protective cover 12. With this arrangement, the housing body 11, the protective cover 12, and the piercing pin 2 are integrally injection-molded, thereby simplifying the process, facilitating manufacturing, and ensuring the structural strength of the explosion-proof battery valve. It is to be noted that in this embodiment, the protective covers 12 and the diaphragms 3 are spaced apart along the axial direction of the housing body 11, and the protective covers 12 and the diaphragms 3 are parallel to each other, thereby ensuring that the protective covers 12 provide a shielding effect to protect the diaphragms 3.

In this embodiment, as shown in FIG. 1 to FIG. 3, the protective housing 1 further includes a mounting portion 14. The mounting portion 14 is connected to the end of the housing body 11 facing away from the protective cover 12. The mounting portion 14 is snap-fitted to the battery housing 20. By snap-fitting the mounting portion 14 to the battery housing 20, it is convenient to mount or remove the explosion-proof battery valve at the battery housing 20.

In this embodiment, the mounting portion 14 includes multiple arc-shaped snap-fit plates 141 spaced apart along the circumferential direction of the housing body 11, the multiple arc-shaped snap-fit plates 141 are connected to the end of the housing body 11 facing away from the protective cover 12, the end of each arc-shaped snap-fit plate 141 is provided with an abutting snap-fit tongue 1411, and the abutting snap-fit tongue 1411 is snap-fitted in a corresponding mounting hole 201 of the battery housing 20. When the mounting portion 14 is inserted into the mounting hole 201 of the battery housing 20, the arc-shaped snap-fit plates 141 contract inward under the pressing action of the hole wall of the mounting holes 201. After the mounting portion 14 is fully inserted into the mounting holes 201, the arc-shaped snap-fit plates 141 elastically return, and the abutting snap-fit tongues 1411 abut tightly against the hole wall of the mounting hole 201, thereby ensuring reliable installation of the mounting portion 14 in the mounting hole 201. When it is required to remove the mounting portion 14 from the mounting hole 201, the arc-shaped snap-fit plates 141 contract inward, allowing the abutting snap-fit tongues 1411 to disengage from the hole wall of the mounting hole 201. The mounting portion 14 is designed as multiple arc-shaped snap-fit plates 141 spaced apart along the circumferential direction of the housing body 11, ensuring the reliability of the connection of the mounting portion 14 in the mounting holes 201 and facilitating slight elastic deformation of the arc-shaped clamping plates 141.

In this embodiment, as shown in FIG. 1 to FIG. 3, an annular protrusion 114 is disposed on the outer peripheral wall of the protective housing 11, the explosion-proof battery valve also includes a sealing ring 4, the sealing ring 4 is sleeved on the outer peripheral wall of the protective housing 1, and the sealing ring 4 is sandwiched between the annular protrusion 114 and the battery housing 20. The sealing ring 4 ensures the air tightness of the battery explosion-proof battery valve at the battery housing 20. In some embodiments, the sealing ring 4 may be a VQM sealing ring so that the sealing ring 4 has the advantages of high temperature resistance and good elastic effect.

In this embodiment, the protective housing 1 also includes multiple reinforcing ribs 13. The reinforcing ribs 13 are spaced apart along the circumferential direction of the piercing pin 2. The reinforcing ribs 13 are connected between the outer wall of the piercing pin 2 and the top wall of the protective cover 12. The reinforcing ribs 13 ensure the connection strength between the piercing pin 2 and the protective housing 1 and ensure the structural strength of the explosion-proof battery valve. In addition, the structural design of the reinforcing ribs 13 facilitates integral injection molding of the housing body 11, the protective cover 12, and the piercing pin 2 and avoids blocking of the radial vent hole 111, thereby ensuring communication between the radial vent hole 111 and the pressure relief hole 113.

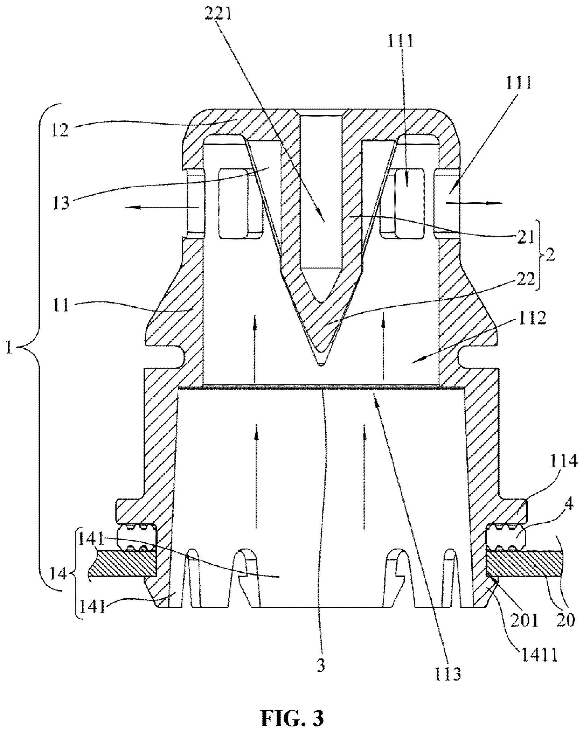

In this embodiment, as shown in FIG. 3, the outer peripheral wall of the housing body 11 is provided with multiple radial vent holes 111 spaced apart along the circumferential direction of the housing body 11. This arrangement improves the exhaust effect. In this embodiment, the radial vent holes 111 are evenly spaced along the circumferential direction of the housing body 11 to ensure the uniformity of exhaust at multiple positions on the outer periphery of the housing body 11. In some embodiments, the shape of the radial vent hole 111 may be, for example, an ellipse, a rectangle, a circle, or a polygon.

In this embodiment, as shown in FIG. 3, the piercing pin 2 includes a connecting column portion 21 and a pin head portion 22 that are connected to each other. The connecting column portion 21 is disposed on the top wall of the protective cover 12. The pin head portion 22 is configured to pierce the diaphragm 3. An inner groove 211 extending along the axial direction of the connecting column portion 21 is disposed in the connecting column portion 21. The inner groove 211 extends through the protective cover 12. The structural design of the piercing pin 2 ensures the structural strength of the explosion-proof battery valve. In addition, the design of the inner groove 211 facilitates integral injection molding of the protective housing 1 and the piercing pin 2 and saving material costs.

This embodiment also provides a battery. The battery includes a battery housing and the preceding explosion-proof battery valve. The protective housing 1 is mounted to the battery housing. This embodiment provides a battery with the preceding explosion-proof battery valve, thereby simplifying the manufacturing process of the explosion-proof battery valve, facilitating manufacturing, reducing the costs, effectively preventing diaphragm failure, and enhancing protection of the diaphragm 3. In this embodiment, the battery housing is provided with a mounting hole 201. The mounting portion 14 of the protective housing 1 is directly mounted in the mounting hole 201.

## Claims

1. An explosion-proof battery valve, comprising:
a protective housing (1) configured to be mounted to a battery housing (20) of a battery and comprising a housing body (11) and a protective cover (12) that are integrally formed by injection molding, wherein the housing body (11) is a cylinder with openings at two ends of the housing body (11), an outer peripheral wall of the housing body (11) is provided with a radial vent hole (111), the protective cover (12) is sealingly connected to an opening at one end of the two ends of the housing body (11), an opening at the other end of the two ends of the housing body (11) is a pressure relief hole (113), and the pressure relief hole (113) is in communication with the radial vent hole (111) and an interior of the battery;
a piercing pin (2) disposed on a top wall of the protective cover (12) and located in an inner cavity (112) of the housing body (11); and
a diaphragm (3) configured to cover the pressure relief hole (113) and to be driven to deform toward the piercing pin (2) by gas discharged from the interior of the battery so as to be pierced by the piercing pin (2).

2. The explosion-proof battery valve of claim 1, wherein the piercing pin (2) is integrally injection-molded on the top wall of the protective cover (12).

3. The explosion-proof battery valve of claim 2, wherein the protective housing (1) further comprises:
a plurality of reinforcing ribs (13) spaced apart along a circumferential direction of the piercing pin (2) and connected between an outer wall of the piercing pin (2) and the top wall of the protective cover (12).

4. The explosion-proof battery valve of any one of claims 1 to 3, wherein the outer peripheral wall of the housing body (11) is provided with a plurality of radial vent holes (111) spaced apart along a circumferential direction of the housing body (11).

5. The explosion-proof battery valve of any one of claims 1 to 3, wherein the piercing pin (2) comprises a connecting column portion (21) and a pin head portion (22) that are connected to each other, the connecting column portion (21) is disposed on the top wall of the protective cover (12), the pin head portion (22) is configured to pierce the diaphragm (3), an inner groove (211) extending along an axial direction of the connecting column portion (21) is disposed in the connecting column portion (21), and the inner groove (211) penetrates through the protective cover (12).

6. The explosion-proof battery valve of any one of claims 1 to 3, wherein the protective housing (1) further comprises:
a mounting portion (14) connected to an end of the housing body (11) facing away from the protective cover (12) and configured to be snap-fitted to the battery housing (20).

7. The explosion-proof battery valve of claim 6, wherein the mounting portion (14) comprises:
a plurality of arc-shaped snap-fit plates (141) spaced apart along a circumferential direction of the housing body (11) and connected to the end of the housing body (11) facing away from the protective cover (12), wherein an end of each arc-shaped snap-fit plate (141) is provided with an abutting snap-fit tongue (1411) configured to be snap-fitted in the mounting hole (201) of the battery housing (20).

8. The explosion-proof battery valve of any one of claims 1 to 3, wherein,
an annular protrusion (114) is disposed on an outer peripheral wall of the protective housing (1), and
the explosion-proof battery valve further comprises a sealing ring (4), sleeved on the outer peripheral wall of the protective housing (1) and sandwiched between the annular protrusion (114) and the battery housing (20).

9. The explosion-proof battery valve of any one of claims 1 to 3, wherein the diaphragm (3) is welded to a cavity wall of the protective housing (1).

10. The explosion-proof battery valve of any one of claims 1 to 3, wherein the diaphragm (3) is a breathable diaphragm.

11. A battery, comprising a battery housing (20) and the explosion-proof battery valve of any one of claims 1 to 10, wherein the protective housing (1) is mounted to the battery housing (20).
